# EUROPEAN PATENT APPLICATION

(11) **EP 4 657 688 A1**
(43) Date of publication of application: **03.12.2025**
(21) Application number: 24747100.6
(22) Date of filing: 11.01.2024
(51) Int. Cl.: H02H 9/02, H02H 7/16, H02H 7/20

(54) **POWER SOURCE PROTECTION CIRCUIT AND SIGNAL PROCESSING DEVICE**

(30) Priority: 23.01.2023 JP 2023007912
(71) Applicant: Sony Semiconductor Solutions Corporation, Atsugi-shi, Kanagawa 243-0014 (JP)
(72) Inventor: NAKAYAMA, Satoshi, Atsugi-shi, Kanagawa 243-0014 (JP)
(74) Representative: Witte, Weller & Partner Patentanwälte mbB
(86) International application number: PCT/JP2024/000344
(87) International publication number: WO 2024/157769

(57) **Abstract**

The present technology relates to a power supply protection circuit and a signal processing apparatus that are capable of suppressing an inrush current when energized by the vehicle power supply in a case where a capacitor is connected in parallel with a vehicle power supply that supplies power to a power supply for the signal processing apparatus.
The protection circuit section includes a capacitor that is connected in parallel with a vehicle power supply that supplies power to a power supply circuit section; and a resistor that is arranged between the vehicle power supply and the capacitor. The present technology can be applied to, for example, a power supply protection circuit or the like of an ECU that constitutes a vehicle control system that is mounted on a vehicle, the ECU including a protection circuit section that supplies safely the vehicle power supply to the power supply circuit section, a power supply circuit section that is a power supply for the ECU, a signal processing section that performs various types of signal processing by using power supplied from the power supply circuit section, and the like.

## Description

### Technical Field

The present technology relates to a power supply protection circuit and a signal processing apparatus, and in particular, relates to a power supply protection circuit and a signal processing apparatus that are capable of suppressing an inrush current when energized by the vehicle power supply in a case where a capacitor is connected in parallel with a vehicle power supply that supplies power to a power supply for the signal processing apparatus.

### Background Art

Various methods have been devised as methods of suppressing inrush currents when respective parts are energized by a vehicle power supply. For example, a starter controller of an idle stop vehicle in which a relay is provided in a power line from a battery to a motor of a starter has been devised (e.g., see Patent Literature 1). The starter controller drives, at an engine restart from idle stop, a relay to a resistor-side state in which contacts are opened and a resistor is serially inserted into the power line and starts energization to a motor, thereby suppressing an inrush current.

On the other hand, as a countermeasure against momentary interruption of a vehicle power supply that supplies power to a power supply for a signal processing apparatus and the like in an electronic control unit (ECU), connecting a high-capacity capacitor in parallel with the vehicle power supply has been devised.

### Citation List

### Patent Literature

Patent Literature 1: Japanese Patent Application Laid-open No. 2011-185260

### Disclosure of Invention

### Technical Problem

However, a method of suppressing an inrush current when energized by the vehicle power supply in a case where a capacitor is connected in parallel with a vehicle power supply that supplies power to a power supply for a signal processing apparatus has not been devised.

The present technology has been made in view of such circumstances to be capable of suppressing an inrush current when energized by the vehicle power supply in a case where a capacitor is connected in parallel with a vehicle power supply that supplies power to a power supply for a signal processing apparatus.

### Solution to Problem

A power supply protection circuit according to a first aspect of the present technology is a power supply protection circuit including: a capacitor that is connected in parallel with a vehicle power supply that supplies power to a power supply for a signal processing apparatus; and a resistor that is arranged between the vehicle power supply and the capacitor.

In the first aspect of the present technology, a capacitor that is connected in parallel with a vehicle power supply that supplies power to a power supply for a signal processing apparatus and a resistor that is arranged between the vehicle power supply and the capacitor are provided.

A signal processing apparatus according to a second aspect of the present technology is a signal processing apparatus including: a power supply protection circuit including a capacitor that is connected in parallel with a vehicle power supply that supplies power to a power supply for a signal processing apparatus, a resistor that is arranged between the vehicle power supply and the capacitor, and an electric-field effect transistor that is connected in parallel with the resistor, the power supply protection circuit being configured so that the electric-field effect transistor is turned on when the power supply for the signal processing apparatus is activated; and a signal processing circuit that is activated by the power supply for the signal processing apparatus, the signal processing apparatus being configured so that the signal processing circuit detects a fault of the electric-field effect transistor by monitoring voltages at both ends of the electric-field effect transistor.

In the second aspect of the present technology, a power supply protection circuit including a capacitor that is connected in parallel with a vehicle power supply that supplies power to a power supply for a signal processing apparatus, a resistor that is arranged between the vehicle power supply and the capacitor, and an electric-field effect transistor that is connected in parallel with the resistor, the power supply protection circuit being configured so that the electric-field effect transistor is turned on when the power supply for the signal processing apparatus is activated; and a signal processing circuit that is activated by the power supply for the signal processing apparatus are provided, and in the signal processing circuit, a fault of the electric-field effect transistor is detected by monitoring voltages at both ends of the electric-field effect transistor.

### Brief Description of Drawings

[Fig. 1] A diagram showing a configuration example of an embodiment of a vehicle control system to which the present technology is applied.
[Fig. 2] A block diagram showing a configuration example of an ECU.
[Fig. 3] A circuit diagram showing a detailed configuration example of a protection circuit section, a power supply circuit section, and a signal processing section.
[Fig. 4] A flowchart describing control processing.
[Fig. 5] A timing chart showing an operation example of the protection circuit section, the power supply circuit section, and the signal processing section.
[Fig. 6] A flowchart describing fault detection processing.
[Fig. 7] A flowchart describing fault notification processing.

### Mode(s) for Carrying Out the Invention

Hereinafter, an embodiment for carrying out the present technology (hereinafter, referred to as embodiment) will be described. It should be noted that descriptions thereof will be given in the following order.

### 1. Embodiments (vehicle control system)

### <1. Embodiment>

### <Configuration Example of Vehicle Control System>

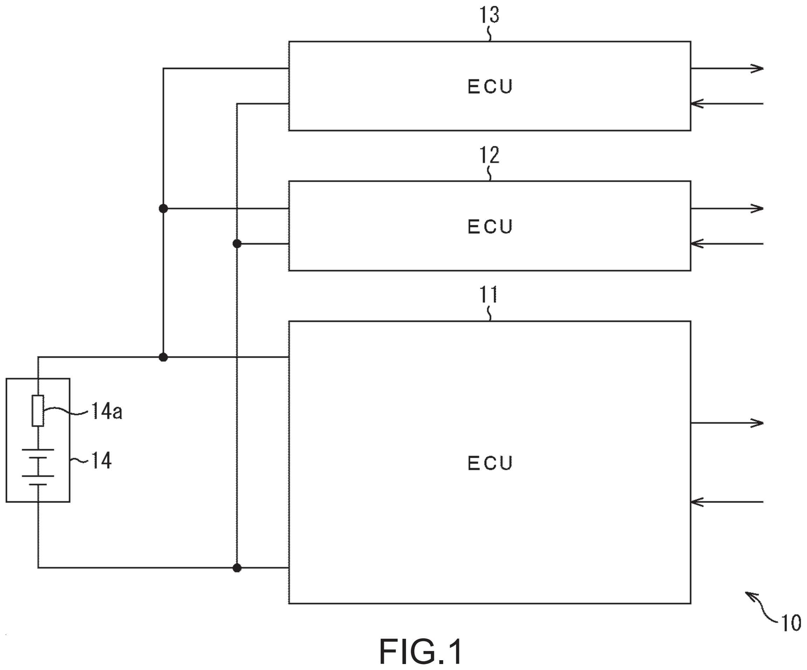

Fig. 1 is a diagram showing a configuration example of an embodiment of a vehicle control system to which the present technology is applied.

A vehicle control system 10 shown in Fig. 1 is a system mounted on a vehicle and performs various types of signal processing. The vehicle control system 10 includes three ECUs 11 to 13 and a vehicle power supply 14. It should be noted that in the example in Fig. 1, the number of ECUs is three, but the number of ECUs is not limited to three.

The ECUs 11 to 13 are supplied with power from the vehicle power supply 14. The ECUs 11 to 13 are signal processing units (signal processing apparatuses) that use the power to perform various signal processing. The ECU 11 performs, for example, signal processing for a vehicle-mounted camera. The signal processing for a vehicle-mounted camera is, for example, processing of recognizing a forward obstacle, processing of calculating a distance to a forward obstacle, and recognizing a red, yellow, or green light at a traffic signal. Specifically, the ECU 11 acquires information from other units, such as the ECUs 12 and 13, and uses the information for signal processing depending on needs. The ECU 11 outputs the results of signal processing to other units.

The ECU 12 performs, for example, signal processing for driving automation systems such as advanced driver-assistance systems (ADAS). Examples of the signal processing for driving automation systems can include processing for a vehicle to determine a driving position in a driving lane by using high-precision map information and processing of determining whether it is possible to safely change the driving lane when changing the driving lane. The ECU 13 performs, for example, signal processing for vehicle control. As in the ECU 11, the ECUs 12 and 13 acquire information from other units and use the information for signal processing depending on needs or output the results of signal processing to other units.

The vehicle power supply 14 is a battery with an internal impedance 14a.

### <Configuration Example of ECU>

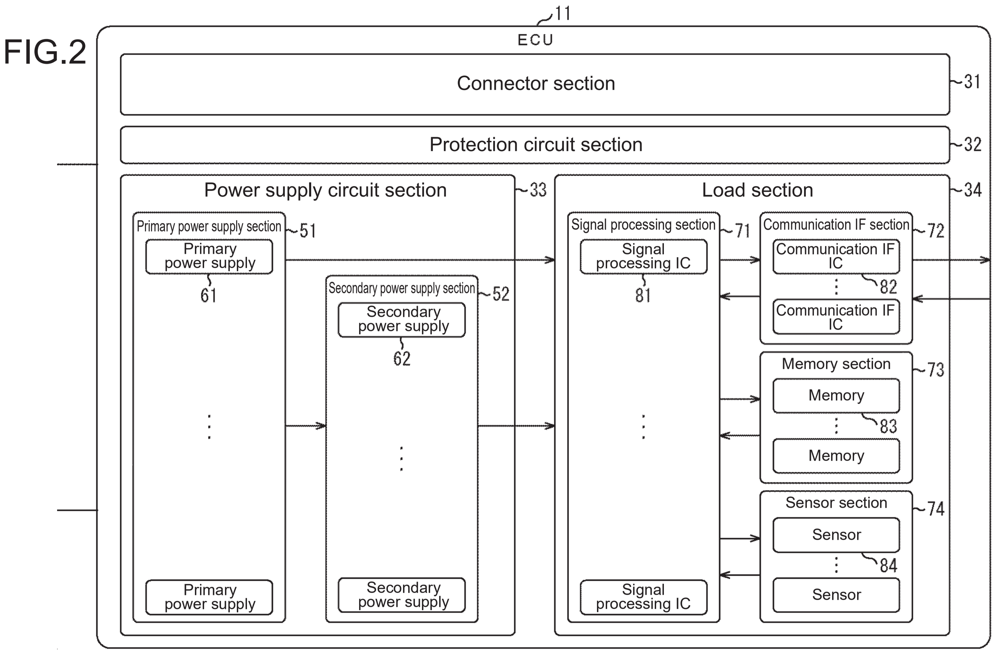

Fig. 2 is a block diagram showing a configuration example of the ECU 11 in Fig. 1.

The ECU 11 in Fig. 2 includes a connector section 31, a protection circuit section 32, a power supply circuit section 33, and a load section 34.

The connector section 31 is constituted by one or more connection pins that connect to other units via wires. The protection circuit section 32 (power supply protection circuit) safely supplies power from the vehicle power supply 14 in Fig. 1 to the power supply circuit section 33.

The power supply circuit section 33 is a power supply for the ECU 11 (power supply for the signal processing apparatus) constituted by a primary power supply section 51 and a secondary power supply section 52. The primary power supply section 51 is constituted by primary power supplies 61 that are one or more DC/DC converters. The primary power supply section 51 generates power of a predetermined voltage (e.g., 5 V) using the power supplied via the protection circuit section 32 and supplies the power to the load section 34 and the secondary power supply section 52.

The secondary power supply section 52 is constituted by secondary power supplies 62 that are one or more DC/DC converters. The secondary power supply section 52 generates power of a predetermined voltage (e.g., 3.3 V, 1.8 V) using the power supplied from the primary power supply section 51 and supplies the power to the load section 34.

The load section 34 includes a signal processing section 71, a communication interface (IF) section 72, a memory section 73, and a sensor section 74. Each part of the load section 34 operates using the power supplied from the primary power supply section 51 or the secondary power supply section 52.

The signal processing section 71 is constituted by one or more signal processing ICs 81 including a system-on-a-chip (SoC), such as a microcontroller unit (MCU) and a recognition processing integrated circuit (IC). At least one of the signal processing ICs 81 performs various types of signal processing while reading and writing information from/in the memory section 73, using information supplied by the communication IF section 72 depending on needs, and supplies the signal processing results to the communication IF section 72. At least one of the signal processing ICs 81 controls the sensor section 74 by supplying various control signals to the sensor section 74. This signal processing IC 81 performs various types of signal processing while reading and writing information from/in the memory section 73 on the basis of the sensor information supplied by the sensor section 74 depending on needs, and supplies the signal processing results to the communication IF section 72.

The communication IF section 72 is constituted by one or more communication IF ICs 82 such as Ethernet PHY, CAN Driver, and low voltage differential signaling (LVDS) IC. The communication IF ICs 82 receive information from other units and supply the information to the signal processing section 71. The communication IF ICs 82 transmit the signal processing results supplied by the signal processing section 71 to the other units.

The memory section 73 is constituted by one or more memories 83 such as flash memory and double-data-rate (DDR) memory. The memories 83 write information supplied by the signal processing section 71, or read out the written information and supply the information to the signal processing section 71.

The sensor section 74 is constituted by one or more sensors 84 such as temperature sensor, camera (image sensor), radar, light detection and ranging (LiDAR), and ultrasonic sensor, and is controlled by the signal processing section 71. The sensors 84 acquire sensor information representing the surrounding conditions such as temperature, image, and distance, and supply the sensor information to the signal processing section 71. In a case where the ECU 11 is equipped with a camera as the sensor section 74, the device with the ECU 11 can be said to be a vehicle-mounted camera device. It should be noted that the sensor section 74 may be provided as a separate part outside the ECU 11. In this case, instead of the sensor section 74, a sensor information acquisition unit that acquires sensor information from the sensor section 74 is provided in the ECU 11. For example, in a case where the sensor section 74 is constituted by a camera and is a separate component from the ECU 11 but they are in the same casing, this device can be said to be a vehicle-mounted camera device with the functions of the ECU 11.

In the ECU 11 configured in the above-mentioned manner, the present technology mainly relates to the protection circuit section 32, the power supply circuit section 33, and the signal processing section 71.

### <Detailed Configuration Example of Protection Circuit Section, Power supply Circuit Section, and Signal Processing Section>

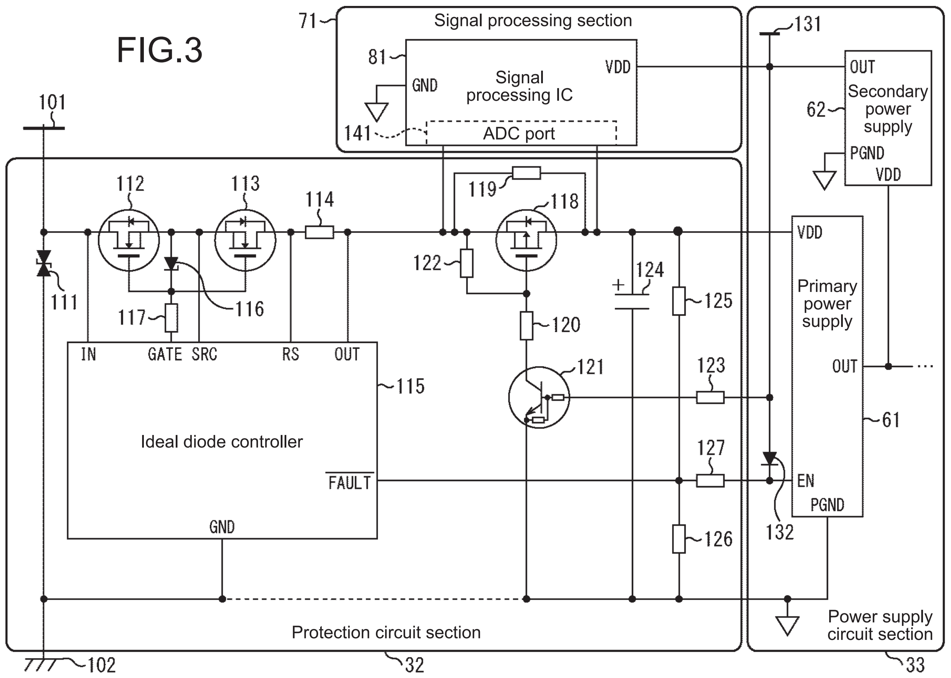

Fig. 3 shows a detailed configuration example of the protection circuit section 32, the power supply circuit section 33, and the signal processing section 71 in Fig. 2.

It should be noted that only the circuits related to the present technology are shown in Fig. 3 for the sake of clarity. Thus, the protection circuit section 32, the power supply circuit section 33, and the signal processing section 71 may include circuits not shown in the figure.

As shown in Fig. 3, a power supply potential 101 and a GND 102 of the vehicle power supply 14 are connected to the protection circuit section 32.

The protection circuit section 32 includes a transient voltage suppressor (TVS) diode 111, n-channel type field effect transistors (FET) (electric-field effect transistors) 112 and 113, a resistor 114, and an ideal diode controller 115. The protection circuit section 32 further includes a TVS diode 116, a resistor 117, a p-channel type FET 118, resistors 119 and 120, a digital transistor 121, resistors 122 and 123, a high-capacity capacitor 124, and resistors 125 to 127.

The TVS diode 111 is arranged between the power supply potential 101 and the GND 102. The TVS diode 111 prevents a surge voltage from being supplied to the circuit at the subsequent stage of the power supply potential 101. The TVS diode 111 does not need to be provided.

Between the power supply potential 101 and the TVS diode 111, the n-channel type FETs 112 and 113 and the resistor 114 are connected in series in order as circuits at the subsequent stage of the power supply potential 101, and the voltage of the power supply potential 101 is supplied. The resistor 114 is a shunt resistor including a resistor of several milliohms. It is possible to detect a current flowing through the circuit at the subsequent stage by monitoring a voltage difference due to this resistor 114.

The ideal diode controller 115 controls gates of the n-channel type FETs 112 and 113, thereby functioning as an electrical fuse where substantially no voltage drop occurs.

Specifically, an IN pin of the ideal diode controller 115 is connected to the drain of the FET 112, and an OUT pin of the ideal diode controller 115 is connected to one end of the resistor 114, which is not connected to the n-channel type FET 113. A GATE pin of the ideal diode controller 115 is connected to the gates of the n-channel type FETs 112 and 113 via the resistor 117, which is connected between the n-channel type FETs 112 and 113 via the TVS diode 116. The TVS diode 116 protects between the gate and source of the n-channel type FETs 112 and 113 while the resistor 117 functions as a gate resistor. Passive components around the n-channel type FETs 112 and 113 are not limited to the TVS diode 116 and the resistor 117.

An SRC pin of the ideal diode controller 115 is connected between the channel type FETs 112 and 113, on the n-channel type FET 113 side with respect to the connection position of the TVS diode 116. An RS pin of the ideal diode controller 115 is connected between the FET 113 and the resistor 114, and a GND pin is connected to the GND 102.

The ideal diode controller 115 controls the voltage on the GATE pin on the basis of a voltage Va on the IN pin, a voltage Vc on the OUT pin, and an electric current value I of a current flowing between the RS pin and the OUT pin. Accordingly, the ideal diode controller 115 interrupts a current flowing through the circuit at the subsequent stage of the resistor 114 in case of overcurrent or reverse current, overvoltage or undervoltage, or reverse connection.

The ideal diode controller 115 also suppresses an inrush current when energized by the vehicle power supply 14 by controlling the voltage of the GATE pin. It should be noted that, although the illustration is omitted, the ideal diode controller 115 includes other connection pins in addition to the IN pin, the OUT pin, the GATE pin, the SRC pin, the RS pin, and a FAULT pin to be described later.

A VDD pin of the primary power supply 61 is connected to one end of the resistor 114, which is not connected to the n-channel type FET 113, via a p-channel type FET 118 connected in parallel and the resistor 119 of several ohms, as a circuit at the subsequent stage of the resistor 114. In this manner, the resistor 119 is arranged between the resistor 114 and the VDD pin of the primary power supply 61, such that it is possible to suppress an inrush current (rush current) from the power supply potential 101 when energized and to prevent the occurrence of hunting phenomena.

Specifically, as will be described later, in a case where the high-capacity capacitor 124 is connected in parallel with the vehicle power supply 14, a larger inrush current is generated when energized by the vehicle power supply 14. As described above, the ideal diode controller 115 suppresses an inrush current by controlling the voltage of the GATE pin, but in some cases, an inrush current cannot be sufficiently suppressed depending on the capacitance and equivalent series resistance (ESR) of the high-capacity capacitor 124. For example, in a case where the high-capacity capacitor 124 is a hybrid aluminum electrolytic capacitor with low ESR, it is difficult to sufficiently suppress an inrush current by the ideal diode controller 115.

In such a case, if an electric current value of an inrush current exceeds a predetermined range that has been set by the ideal diode controller 115, the ideal diode controller 115 interrupts a current flowing through the circuit at the subsequent stage, resulting in a hunting phenomenon. In view of this, the resistor 119 is arranged between the resistor 114 and the VDD pin of the primary power supply 61 in the protection circuit section 32, and accordingly, an inrush current is sufficiently suppressed. As a result, the hunting phenomenon is prevented. It should be noted that in the example shown in Fig. 3, the single resistor 119 is provided, but a plurality of resistors connected in series or parallel may be provided.

A gate of the p-channel type FET 118 is connected to the GND 102 via the resistor 120, which functions as a gate resistor connected in series, and the digital transistor 121. Between the gate of the p-channel type FET 118 and the resistor 120, a source of the p-channel type FET 118 is connected via the resistor 122. This resistor 122 protects between the gate and source of the p-channel type FET 118. An OUT pin of the secondary power supply 62 is connected to a gate of the digital transistor 121 via the resistor 123 that functions as a gate resistor.

Thus, when the output of the secondary power supply 62 is started, i.e., when the secondary power supply 62 is activated, the p-channel type FET 118 is turned on. Accordingly, the p-channel type FET 118 functions as a bypass for the resistor 119, which is connected in parallel with the p-channel type FET 118 itself. As a result, the load section 34 can be prevented from stopping operation when the voltage of the vehicle power supply 14 is low.

Specifically, immediately after energization by the vehicle power supply 14, i.e., before activation of the secondary power supply 62, the p-channel type FET 118 is turned off. Therefore, a current flows through the resistor 119, such that the impedance becomes higher and an inrush current can be suppressed. However, in a case where a current continues to flow through the resistor 119 after the secondary power supply 62 is activated, a voltage drop always occurs, making it impossible for the load section 34 to operate in a case where the voltage of the vehicle power supply 14 is low. In view of this, after the secondary power supply 62 is activated, the p-channel type FET 118 is turned on and the p-channel type FET 118 bypasses the resistor 119 and allows a current to flow. Accordingly, a voltage drop does not occur after the secondary power supply 62 is activated, and the load section 34 can be prevented from stopping operation in a case where the voltage of the vehicle power supply 14 is low.

One end of the high-capacity capacitor 124 is connected between the p-channel type FET 118 and resistor 119 connected in parallel and the VDD pin of the primary power supply 61, and the other end of the high-capacity capacitor 124 is connected to the GND 102. That is, the high-capacity capacitor 124 is connected in parallel with the vehicle power supply 14, and the n-channel type FETs 112 and 113, the resistor 114, and the p-channel type FET 118 and resistor 119 connected in parallel are arranged between the high-capacity capacitor 124 and the power supply potential 101.

The high-capacity capacitor 124 is connected in parallel with the vehicle power supply 14 at the previous stage of the primary power supply 61, such that it can supply power to the primary power supply 61 instead of the vehicle power supply 14 when the vehicle power supply 14 is momentarily interrupted. For example, a highly reliable hybrid aluminum electrolytic capacitor is used as the high-capacity capacitor 124. The capacity of the high-capacity capacitor 124 is capacity that enables the load section 34 to maintain operation during a momentary interruption for about 5 ms for example. Although the single high-capacity capacitor 124 is provided in the example in Fig. 3, a plurality of high-capacity capacitors 124 may be provided in parallel. The high-capacity capacitor 124 may be a ceramic or tantalum capacitor or the like. With a highly reliable hybrid aluminum electrolytic capacitor, the risk of a short circuit fault can be suppressed.

Moreover, the resistors 125 and 126 connected in series are also connected in parallel to the vehicle power supply 14. A FAULT pin of the ideal diode controller 115 is connected between the resistor 125 and the resistor 126, and an EN pin (enable pin) of the primary power supply 61 is connected via the resistor 127. The FAULT pin is active low and is an open drain. The output of the FAULT pin is made hi-Z in a case where a ratio of the voltage Vc to the voltage Va is equal to or higher than a predetermined ratio, in a case where the electric current value I is within a predetermined range, and in a case where the voltage Va is within a predetermined range. The output of the FAULT pin is made Low in a case where the electric current value I is outside the predetermined range or in a case where the voltage Va is outside the predetermined range.

As described above, the FAULT pin is connected to the EN pin of the primary power supply 61 via the resistor 127, such that a hunting phenomenon in the primary power supply 61 can be prevented.

Specifically, vehicles have a phenomenon called cold cranking, in which the battery voltage temporarily drops significantly to about 3 to 4 V when a cell motor that consumes a large current is driven while the battery and engine are cold. There is also a case where the battery voltage temporarily drops during idle stop. A lower limit of the operation voltage of the primary power supply 61, i.e., a threshold of the voltage of the EN pin, should be as low as possible in order to allow the operation of the load section 34 to continue even during such a drop in battery voltage.

However, since the voltage on the EN pin is a voltage obtained by dividing the voltage on the VDD pin by means of the resistors 125 and 126, the primary power supply 61 is activated and the operation of the load section 34 is started immediately after energized by the vehicle power supply 14 if the threshold for the voltage on the EN pin is set low. That is, the primary power supply 61 is activated and the operation of the load section 34 is started at a point of time when the high-capacity capacitor 124 is not sufficiently charged and the voltage on the VDD pin is not sufficiently high. Therefore, a hunting phenomenon may then occur. That is, the voltage on the EN pin falling below the threshold as a result of a voltage drop due to the discharge of the high-capacity capacitor 124, such that the primary power supply 61 is stopped, and the charge of the high-capacity capacitor 124 progressing, such that the primary power supply 61 is activated, may repeatedly occur.

In view of this, the EN pin of the primary power supply 61 is connected to the FAULT pin, which is made hi-Z in a case where the ratio of the voltage Vc to the voltage Va is equal to or higher than the predetermined ratio. Accordingly, the primary power supply 61 is not activated until the high-capacity capacitor 124 is sufficiently charged. As a result, the hunting phenomenon can be prevented. It should be noted that in a case where the hysteresis of upper and lower limit thresholds of the operation voltage can be set to be large in the primary power supply 61, the FAULT pin does not need to be connected to the EN pin.

The power supply circuit section 33 also includes a power supply potential 131, a diode 132, and the like in addition to the primary power supply 61 and the secondary power supply 62. An OUT pin of the primary power supply 61 is connected to a VDD pin of the secondary power supply 62. The primary power supply 61 is activated in accordance with a voltage input to the EN pin, generates power of a predetermined voltage from the voltage input to the VDD pin, and outputs the power from the OUT pin. A PGND pin of the primary power supply 61 is connected to the GND 102.

The secondary power supply 62 generates power of a predetermined voltage using the power from the primary power supply 61 input to the VDD pin and outputs the power from the OUT pin. The OUT pin of the secondary power supply 62 connects the VDD pin of the signal processing IC 81, which is the MCU, and also connects to the power supply potential 131. The voltage of the power supply potential 131 is the same as the voltage of the secondary power supply 62 for example.

The OUT pin of the secondary power supply 62 is also connected between the resistor 127 and the EN pin of the primary power supply 61 via the diode 132. Accordingly, a latching mechanism for the primary power supply 61 is formed.

Specifically, in a case where the FAULT pin is connected to the EN pin, if the electric current value I falls outside the predetermined range or the voltage Va falls outside the predetermined range due to momentary noise or the like, the FAULT pin becomes Low and the primary power supply 61 is turned off. Therefore, the OUT pin of the secondary power supply 62 is connected to the EN pin through the diode 132, and the EN pin is latched so that the output of the FAULT pin is ignored after the output of the secondary power supply 62 is started, i.e., after the primary power supply 61 is activated. Accordingly, the primary power supply 61 does not easily stop after it is activated.

The resistor 123, which is connected to the gate of the digital transistor 121, is connected to the OUT pin of the secondary power supply 62 by being connected between the OUT pin of the secondary power supply 62 and the diode 132. A PGND pin of the secondary power supply 62 is connected to the GND 102.

A GND pin of the signal processing IC 81 connects to the GND 102. The signal processing IC 81 (signal processing circuit) is activated by the power input to the VDD pin. An ADC port 141 of the signal processing IC 81 connects to both ends of the p-channel type FET 118 and the resistor 119, which are connected in parallel. The signal processing IC 81 detects an open fault of the p-channel type FET 118 by monitoring voltages at both ends. Since the p-channel type FET 118 is turned on at the activation of the signal processing IC 81, no voltage drop due to the resistor 119 occurs in a case where the p-channel type FET 118 does not have an open fault.

Although the illustration is omitted, in a case where the signal processing IC 81 has detected a fault of the p-channel type FET 118, the signal processing IC 81 notifies another unit such as the ECU 12, which performs signal processing for ADAS at the subsequent stage, via the communication IF IC 82.

In a case where an open fault has occurred in the p-channel type FET 118, a voltage drop always occurs. Therefore, the load section 34 cannot operate in a case where the voltage of the vehicle power supply 14 drops. That is, it cannot operate even if the voltage of the vehicle power supply 14 is within the operation voltage range of the ECU 11 (e.g., from 8 V to 16 V). However, even in a case where an open fault of the p-channel type FET 118 has occurred, the ECU 11 does not operate abnormally because the range of the voltage at which the ECU 11 can operate is merely narrowed. Therefore, the signal processing IC 81 merely makes a notification to another unit and does not immediately stop the operation of the ECU 11.

It should be noted that in a case where the other unit that has received the notification from the signal processing IC 81 receives the notification even after a certain time has elapsed, they may notify a user of the fault and urge parts replacement or the like, or stop the idle stop operation, which causes a voltage drop in the vehicle power supply 14. Once the operation of the ECU 11 stops (is reset) due to a voltage drop in the vehicle power supply 14 during idle stop, the signal processing section 71 also stops. In a case where the operation of the ECU 11, which has stopped once due to a voltage drop in the vehicle power supply 14 during idle stop, is resumed upon recovery from the idle stop, the signal processing section 71 takes time to be activated. Therefore, there is a case where the signal processing section 71 does not function immediately after recovery. In this case, this becomes a major problem when processing in the signal processing section 71 is processing required at the driving start, such as processing for ADAS system. For example, in a case where the signal processing section 71 does not function, i.e., in a case where a function that is required to operate during driving does not operate, the user is generally notified of it for warning, but if the function stops for a certain time at each idle stop, a problem of significant deterioration of the product value arises. Alternatively, in a case where the starting/stopping of a car is automatically controlled by automated driving, when the vehicle departs after idle stop, the signal processing section 71 of the ECU 11 is activated and waits until the necessary functions are in operation before the vehicle departs. In this case, a problem in that a smooth departure is not possible arises. Therefore, the other unit that has received the notification from the signal processing IC 81 can prevent the occurrence of a period when the signal processing IC is not functioning by stopping the idle stop operation.

As shown in the example in Fig. 3, it is desirable to use power supplied from the secondary power supply 62 to the signal processing IC 81, which is the MCU, for controlling ON/OFF of the p-channel type FET 118. The reason for this is that the power is likely to be preferentially supplied to the signal processing IC 81, which is the MCU, because the MCU performs fault detection processing and control processing of communication with external devices as signal processing.

### <Description of Control Processing>

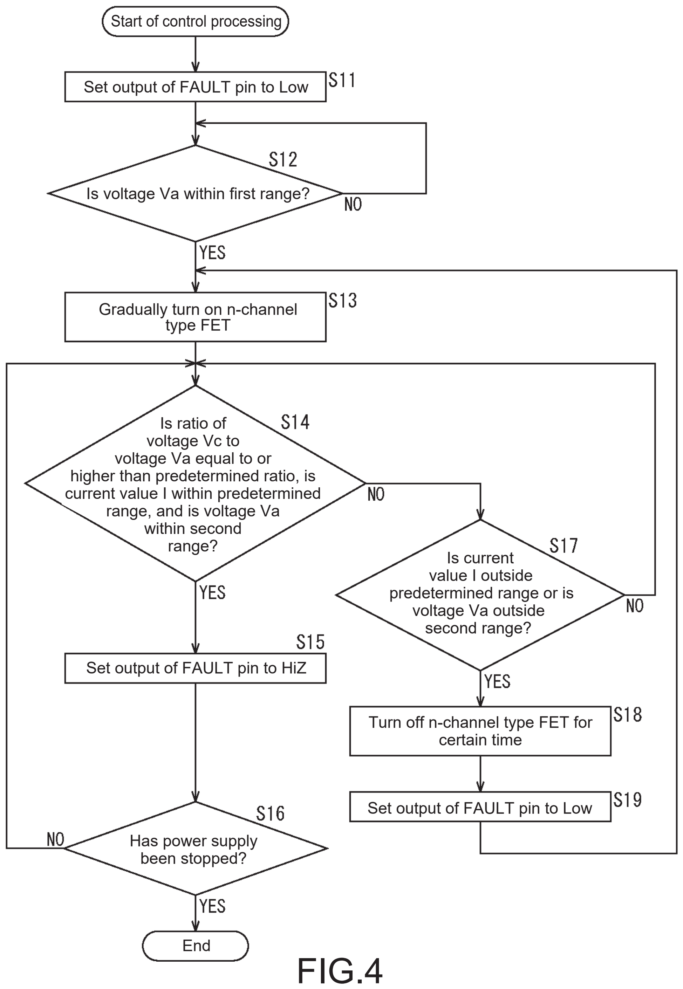

Fig. 4 is a flowchart describing control processing by the ideal diode controller 115 in Fig. 3. This control processing is started, for example, when energization by the vehicle power supply 14 is started.

In Step S11 of Fig. 4, the ideal diode controller 115 sets the output of the FAULT pin to Low. In Step S12, the ideal diode controller 115 determines whether or not the voltage Va is within a first range. The first range is, for example, a range from 4.3 V to 30 V. By the processing of Step S12, the ideal diode controller 115 detects overvoltage and undervoltage of power supplied from the vehicle power source 14 and reverse connection with the vehicle power source 14.

In a case where it is determined in Step S12 the voltage Va is within the first range, i.e., no overvoltage, undervoltage, or reverse connection is detected, the processing proceeds to Step S13. In Step S13, the ideal diode controller 115 starts controlling the voltage on the GATE pin, i.e., controlling the gates of the n-channel type FETs 112 and 113, and gradually turns on the n-channel type FETs 112 and 113. In this manner, the ideal diode controller 115 can suppress an inrush current by gradually turning on the n-channel type FETs 112 and 113.

In Step S14, the ideal diode controller 115 determines whether or not the ratio of the voltage Vc to the voltage Va is equal to or higher than the predetermined ratio, the electric current value I is within the predetermined range, and the voltage Va is within a second range. A threshold value of the ratio of the voltage Vc to the voltage Va used in the determination of Step S14 is 90%, for example, and the range of the electric current value I is from 0 A to 6 A, for example. The second range is wider than the first range, for example, from 3.4 V to 31 V. The second range is wider than the first range, for example, from 3.4 V to 31 V. The second range is determined, for example, by a constant of a resistor (not shown) outside the ideal diode controller 115. By the processing of Step S14, the ideal diode controller 115 detects insufficient charge of the high-capacity capacitor 124, overcurrent and reverse current, overvoltage and undervoltage such as a surge voltage of the power supplied from the vehicle power supply 14, and reverse connection with the vehicle power supply 14.

In a case where it is determined in Step S14 that the ratio of the voltage Vc to the voltage Va is equal to or higher than the predetermined ratio, the electric current value I is within the predetermined range, and the input voltage is within the second range, the processing proceeds to Step S15. That is, in a case where insufficient charge, overcurrent, reverse current, overvoltage, undervoltage, and reverse connection of the high-capacity capacitor 124 have not been detected, the processing proceeds to Step S15.

In Step S15, the ideal diode controller 115 sets the output of the FAULT pin to hi-Z. In Step S16, the ideal diode controller 115 determines whether or not the supply of power by the vehicle power supply 14 has been stopped.

In a case where it is determined in Step S16 that the supply of power has not been stopped, the processing returns to Step S14 and the subsequent processing is repeated.

On the other hand, in a case where it is determined in Step S16 that the supply of power has been stopped, the processing ends.

In a case where it is determined in Step S14 that the ratio of the voltage Vc to the voltage Va is lower than the predetermined ratio, or the electric current value I is outside the predetermined range, or the input voltage is outside the second range, the processing proceeds to Step S17. That is, in a case where insufficient charge, overcurrent, reverse current, overvoltage, undervoltage, or reverse connection of the high-capacity capacitor 124 has been detected, the processing proceeds to Step S17.

In Step S17, the ideal diode controller 115 determines whether or not the electric current value I is outside the predetermined range or the input voltage is outside the second range. In a case where it is determined in Step S17 that the electric current value I is outside the predetermined range or the input voltage is outside the second range, i.e., in a case where overcurrent, reverse current, overvoltage, undervoltage, or reverse connection (negative voltage) has been detected, the processing proceeds to Step S18.

In Step S18, the ideal diode controller 115 turns off the n-channel type FETs 112 and 113 for a certain time by setting the GATE pin to Low, thereby interrupting a current to the circuit at the subsequent stage. Accordingly, the ideal diode controller 115 provides overcurrent protection, reverse current protection, overvoltage protection, and reverse connection protection to prevent fuming and ignition.

Therefore, recovery from overcurrent protection is possible. In this regard, in a case where a fuse is used for overcurrent protection, if overcurrent occurs due to a temporary short circuit caused by an inrush current, condensation, or the like, the fuse may blow and recovery from overcurrent protection may not be possible.

Voltage drops that occur due to overcurrent protection, reverse current protection, overvoltage protection, and reverse connection protection can be suppressed. That is, the voltage drops due to overcurrent protection, reverse current protection, overvoltage protection, and reverse connection protection by the ideal diode controller 115 are voltage drops due to the on-resistance of the n-channel type FETs 112 and 113. In this regard, in a case where a Schottky barrier diode is used for reverse connection protection, a voltage drop in the forward voltage occurs due to the reverse connection protection.

Overvoltage protection can be performed even in a case where the TVS diode 111 cannot prevent a surge voltage.

In Step S19, the ideal diode controller 115 sets the output of the FAULT pin to Low. The processing then returns to Step S13 and the subsequent processing is performed.

On the other hand, in a case where it is determined in Step S17 that the electric current value I is within the predetermined range and the input voltage is within the second range, i.e., in a case where insufficient charge of the high-capacity capacitor 124 has been detected, the processing returns to Step S14 and the subsequent processing is performed.

As described above, the second range used for the second and subsequent determinations is set to be wider than the first range used for determining when the n-channel type FETs 112 and 113 are first turned on after energization by the vehicle power supply 14 is started. That is, the threshold value of the ratio of the voltage Vc to the voltage Va has hysteresis before and after the first n-channel type FETs 112 and 113 are turned on. Accordingly, a hunting phenomenon in on/off of the n-channel type FETs 112 and 113 can be prevented.

### <Operation Example of Protection Circuit Section, Power supply Circuit Section, and Signal Processing Section>

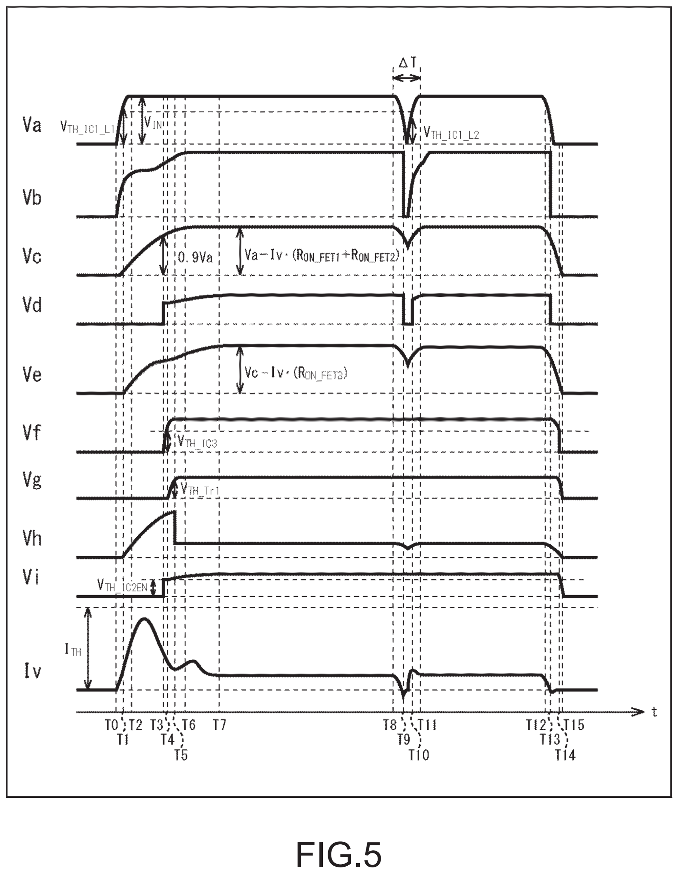

Fig. 5 is a timing chart showing an operation example of the protection circuit section 32, the power supply circuit section 33, and the signal processing section 71.

The vertical axes of the first to third rows from the top in Fig. 5 show the voltage Va at the IN pin of the ideal diode controller 115, a voltage Vb at the gates of the n-channel type FETs 112 and 113, and the voltage Vc at the OUT pin of the ideal diode controller 115, respectively. The vertical axes of the fourth to seventh rows show a voltage Vd between the resistors 125 and 126, a voltage Ve at the VDD pin of the primary power supply 61, a voltage Vf at the OUT pin of the primary power supply 61, and a voltage Vg at the VDD pin of the secondary power supply 62, respectively. The vertical axes of the eighth to tenth rows show a voltage Vh at the gate of the p-channel type FET 118, a voltage Vi at the EN pin, and an electric current value Iv flowing to the circuit at the subsequent stage from the power supply potential 101, respectively. The horizontal axis indicates a time t.

In the example in Fig. 5, at a time T0, the supply of power of a voltage V_{IN} from the vehicle power supply 14 to the protection circuit section 32 is started. Accordingly, the voltage Va and the current Iv increase as shown in the first and tenth rows of Fig. 5, while the capacitance of the TVS diode 111, the capacitor (not shown), and the like in front of the n-channel type FETs 112 and 113 is charged with electric charges.

When the voltage Va exceeds a lower limit V _{TH_IC1_L1} of the first range as shown in the first row at a time T1, the ideal diode controller 115 gradually applies a voltage to the GATE pin and the voltage Vb gradually increases as shown in the second row. Accordingly, the n-channel type FETs 112 and 113 are gradually turned on. It should be noted that in order to turn on the n-channel type FETs 112 and 113, the voltage Vb needs to be higher than the voltage Va, so the ideal diode controller 115 includes a charge pump.

When the n-channel type FETs 112 and 113 are turned on, an inrush current flows through the high-capacity capacitor 124. However, since the n-channel type FETs 112 and 113 are gradually turned on, an inrush current is suppressed. Moreover, the p-channel type FET 118 is open. That is, since the secondary power supply 62 has not yet been activated, the digital transistor 121 is turned off, and the voltage Vc is applied on both the source and gate of the p-channel type FET 118. Thus, the current that flows from the n-channel type FETs 112 and 113 through the resistor 114 flows through the resistor 119, and accordingly, an inrush current is further suppressed. Therefore, as shown in the tenth row, the electric current value Iv does not exceed an upper limit I_{TH} of the predetermined range used for overcurrent detection by the ideal diode controller 115. When the n-channel type FETs 112 and 113 are turned on, the charge of the high-capacity capacitor 124 is started, so the voltage Vc increases as shown in the third row.

When charging the capacitance with electric charges in front of the n-channel type FETs 112 and 113 is completed at a time T2, the voltage Va becomes V_{IN}.

When the ratio of the voltage Vc to the voltage Va exceeds the predetermined ratio (90% in the example in Fig. 5) at a time T3, the voltage at the FAULT pin becomes hi-Z. As a result, the voltages Vd and Vi become values obtained by dividing the voltage Ve as shown in the fourth, fifth, and nineth rows. Since the voltage Vi exceeds a threshold V_{TH_IC2EN} of the EN pin, the primary power supply 61 is activated and the output of the primary power supply 61 starts. Accordingly, the voltage Vf increases as shown in the sixth row while the capacitance of the capacitor (not shown) at the subsequent stage of the primary power supply 61 is charged with electric charges.

When the voltage Vf reaches an activation threshold V_{TH_IC3} (e.g., 3.3V) of the secondary power supply 62 at a time T4, the secondary power supply 62 is activated and the output of the secondary power supply 62 starts. Accordingly, the voltage Vg increases as shown in the seventh row while the capacitance of the capacitor (not shown) at the subsequent stage of the secondary power supply 62 is charged with electric charges.

When the voltage Vg exceeds a threshold V_{TH_Tr1} at which the digital transistor 121 is turned on at a time T5, the secondary power supply 62 is activated and the output of the secondary power supply 62 starts. Accordingly, as shown in the eighth row, the p-channel type FET 118 is turned on because the voltage Vh becomes a value obtained by dividing the voltage Vc.

As a result, when the charging of the high-capacity capacitor 124 is completed, the voltage Vc becomes substantially the same as the voltage Va as shown in the third row at a time T6. Specifically, the voltage Vc becomes a value (Va - Iv × (R_{ON_FET1} + R_{ON_FET2}) obtained by subtracting an amount corresponding to a voltage drop due to on-resistance of on-resistance R_{ON_FET1} of the n-channel type FET 112 and on-resistance R_{ON_FET2} of the n-channel type FET 113 from the voltage Va. Moreover, the voltage Ve is substantially the same as the voltage Vc as shown in the fifth row at a time T7. Specifically, the voltage Ve is a value (Va - Iv × R_{ON_FET3}) obtained by subtracting an amount corresponding to a voltage drop due to on-resistance R_{ON_FET3} of the p-channel type FET 118 from the voltage Va.

When a momentary interruption occurs in the vehicle power supply 14 at a time T8, the voltages Va, Vc, and Ve drop as shown in the first, third, and fifth rows. Moreover, for example, currents Ia and Ib flow from the high-capacity capacitor 124 to the ECUs 12 and 13 connected to the vehicle power supply 14, respectively. Accordingly, when the electric current value Iv falls below the lower limit of the predetermined range, i.e., becomes negative at a time T9, the ideal diode controller 115 detects reverse current and sets the voltage at the GATE pin to Low for a certain time and also sets the output at the FAULT pin to Low. As a result, the voltage Vb becomes Low as shown in the second row, and the n-channel type FETs 112 and 113 are turned off. Moreover, the voltage Vd becomes Low as shown in the fourth row.

However, the voltage Vi on the EN pin is latched by the voltage Vg on the OUT pin of the secondary power supply 62. Moreover, a drop in the voltage Ve is suppressed by the high-capacity capacitor 124. Therefore, in a case where a momentary interruption time ΔT is several milliseconds, the voltage Vi on the EN pin does not become equal to or lower than the threshold V_{TH_IC2EN} as shown in the nineth row, and the output of the primary power supply 61 continues. As a result, the load section 34 can continue operation.

It should be noted that even in a case where no reverse current occurs, the ideal diode controller 115 detects undervoltage when the voltage Va falls below a lower limit V_{TH_IC1_L2} of the second range because the voltage Va drops when the vehicle power supply 14 is momentarily interrupted. The ideal diode controller 115 then performs processing similar to the processing when reverse current is detected.

When the ratio of the voltage Vc to the voltage Va returns to a ratio equal to or higher than the predetermined ratio at a time T10, the current I returns to a ratio within the predetermined range, and the voltage Va returns to a ratio equal to or higher than the lower limit V_{TH_IC1_L2} of the second range, the FAULT pin returns to hi-Z. It should be noted that the lower limit V_{TH_IC1_L2} of the second range is lower than the lower limit V_{TH_IC1_L1} of the first range. As a result of the FAULT pin returning to hi-Z, the voltage Vd becomes a voltage obtained by dividing the voltage Ve as shown in the fourth and fifth rows.

When the vehicle power supply 14 sufficiently recovers from the momentary interruption at a time T11, the voltages Va to Vi and the electric current value Iv enter states similar to the states before the momentary interruption.

When the supply of power from the vehicle power supply 14 is stopped in accordance with the user's instruction to turn off the power supply of the vehicle at a time T12, the voltages Va, Vc, and Ve drop and the currents Ia and Ib flow as at the time T8. Accordingly, at a time T13, the ideal diode controller 115 performs processing similar to the processing at the time T9. As a result, the voltage Vb becomes Low as shown in the second row and the voltage Vd becomes Low as shown in the fourth row.

Due to the drop in the voltage Ve on the VDD pin of the primary power supply 61, the voltage Vf on the OUT pin also drops, and when the voltage Vf falls below the activation threshold V_{TH_IC3} of the secondary power supply 62 at a time T14, the secondary power supply 62 stops. Thus, as shown in the seventh row, the voltage Vg gradually decreases, and accordingly, the voltage Vi also decreases as shown in the ninth row.

As a result, when the voltage Vi falls below the threshold V_{TH_IC2EN} of the EN pin at a time T15, the primary power supply 61 also stops.

### <Description of Fault Detection Processing>

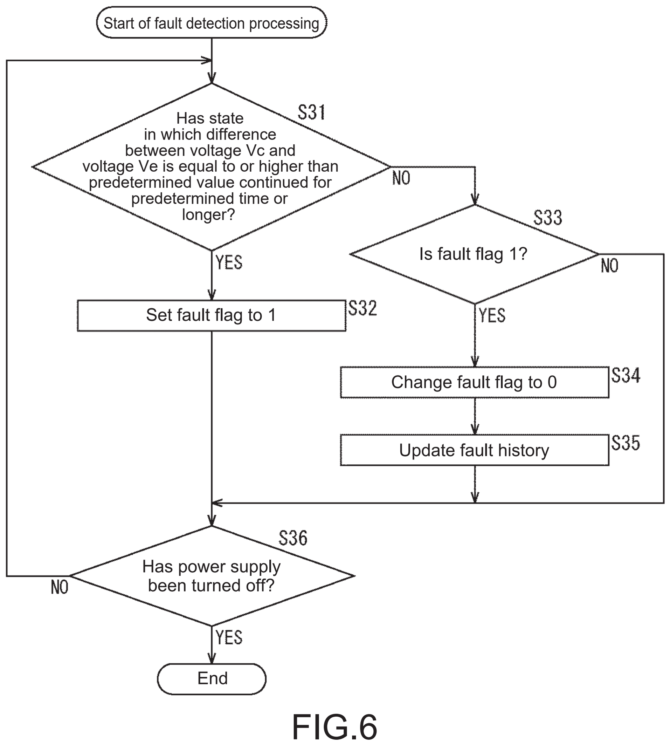

Fig. 6 is a flowchart describing fault detection processing in which the signal processing IC 81 detects an open fault of the p-channel type FET 118.

In Step S31 of Fig. 6, the signal processing IC 81 determines whether or not the state in which a difference between the voltage Vc and the voltage Ve input from the ADC port 141 is equal to or higher than the predetermined value has continued for a predetermined time or longer. In a case where it is determined that the state in which the difference between the voltage Vc and the voltage Ve is equal to or higher than the predetermined value has continued for the predetermined time or longer in Step S31, the processing proceeds to Step S32.

In Step S32, the signal processing IC 81 sets a fault flag indicating whether or not the p-channel type FET 118 has a fault held in the memory 83 to 1 indicating the presence of the fault, and causes the processing to proceed to Step S36.

On the other hand, in a case where it is determined in Step S31 that the state in which the difference between the voltage Vc and the voltage Ve is equal to or higher than the predetermined value has not continued for the predetermined time or longer, in Step S33, the signal processing IC 81 determines whether or not the fault flag held in the memory 83 is 1.

In a case where it is determined in Step S33 that the fault flag is 1, the signal processing IC 81 changes the fault flag held in the memory 83 to 0 indicating no fault, and causes the processing to proceed to Step S35.

In Step S35, the signal processing IC 81 updates a fault history, which is a history of past faults of the p-channel type FET 118 held in the memory 83. Specifically, the signal processing IC 81 describes, for example, in the fault history that a fault of the p-channel type FET 118 has occurred but the fault has been resolved. The processing then proceeds to Step S36.

On the other hand, in a case where it is determined in Step S33 that the fault flag is not 1, the processing skips Steps S34 and S35 and proceeds to Step S36.

In Step S36, the signal processing IC 81 determines whether or not the power supply has been turned off, i.e., whether or not the power is no longer supplied from the secondary power supply 62.

In a case where it is determined in Step S36 that the power supply has not been turned off, i.e., it is determined that the power is supplied from the secondary power supply 62, the processing returns to Step S31 and the subsequent processing is repeated.

On the other hand, in a case where it is determined in Step S36 that the power is turned off, i.e., it is determined that the power is not supplied from the secondary power supply 62, the fault detection processing ends.

### <Description of Fault Notification Processing>

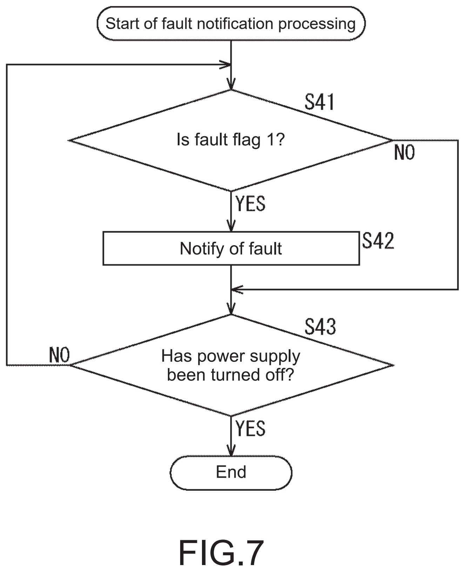

Fig. 7 is a flowchart describing fault notification processing in which the signal processing IC 81 notifies the user of a fault.

In Step S41, the signal processing IC 81 determines whether or not the fault flag held in the memory 83 is 1. In a case where it is determined in Step S41 that the fault flag is 1, the signal processing IC 81 notifies another unit of the fault via the communication IF section 72 in Step S42, and causes the processing to proceed to Step S43.

In a case where it is determined in Step S41 that the fault flag is not 1, i.e., in a case where the fault flag is 0, the processing skips Step S42 and proceeds to Step S43.

In Step S43, the signal processing IC 81 determines whether or not the power supply has been turned off as in the processing of Step S36 of Fig. 6. In a case where it is determined in Step S43 that the power supply has not been turned off, the processing returns to Step S41 and the subsequent processing is repeated.

On the other hand, in a case where it is determined in Step S43 that the power supply has been turned off, the fault notification processing ends.

It should be noted that the fault notification processing in Fig. 7 does not need to be performed. The signal processing IC 81 may transmit the fault history held in the memory 83 to the other unit. The other unit can easily analyze the cause of the fault on the basis of this fault history.

As described above, the ECU 11 includes the high-capacity capacitor 124, which is connected in parallel with the vehicle power supply 14 that supplies power to the power supply circuit section 33, and the resistor 119, which is arranged between the vehicle power supply 14 and the capacitor 124. Therefore, an inrush current when energized by the vehicle power supply 14 can be suppressed.

It should be noted that in the present specification, the system means a set of components (apparatuses, modules (parts), etc.), regardless of whether or not all the components are in the same enclosure. Therefore, a plurality of apparatuses housed in separate enclosures and connected via a network, and a single apparatus containing a plurality of modules in a single enclosure are both systems.

The embodiment of the present technology is not limited to the above-mentioned embodiment, but various modifications can be made without departing from the gist of the present technology.

The effects described in the present specification are examples only and are not limited and effects other than those described in the present specification may be provided.

The present technology can take the following configurations.
(1) A power supply protection circuit, including:
   a capacitor that is connected in parallel with a vehicle power supply that supplies power to a power supply for a signal processing apparatus; and
   a resistor that is arranged between the vehicle power supply and the capacitor.
(2) The power supply protection circuit according to (1), further including
   an electric-field effect transistor that is connected in parallel with the resistor, the power supply protection circuit being configured so that
   the electric-field effect transistor is turned on when the power supply for the signal processing apparatus is activated.
(3) The power supply protection circuit according to (2), which is configured so that
   the electric-field effect transistor is a p-channel type electric-field effect transistor.
(4) The power supply protection circuit according to (2) or (3), which is configured so that
   an output of the power supply for the signal processing apparatus is connected to a gate of the electric-field effect transistor.
(5) The power supply protection circuit according to (4), which is configured so that
   a transistor is connected to the gate of the electric-field effect transistor, and
   the output of the power supply for the signal processing apparatus is connected to a gate of the transistor.
(6) The power supply protection circuit according to (1), further including:
   an electric-field effect transistor that is arranged between the vehicle power supply and the resistor; and
   an ideal diode controller that controls the electric-field effect transistor, the power supply protection circuit being configured so that
   an enable pin of the power supply for the signal processing apparatus is connected to a FAULT pin of the ideal diode controller.
(7) The power supply protection circuit according to (6), which is configured so that
   the ideal diode controller sets the FAULT pin to have a high impedance in a case where a ratio of an input voltage of the power supply for the signal processing apparatus to a voltage of the vehicle power supply is equal to or higher than a predetermined ratio.
(8) The power supply protection circuit according to (7), which is configured so that
   the ideal diode controller sets the FAULT pin to have a high impedance in a case where a ratio of the input voltage of the power supply for the signal processing apparatus to the voltage of the vehicle power supply is equal to or higher than a predetermined ratio, the voltage of the vehicle power supply is within a predetermined range, and an electric current value of a current that flows from the vehicle power supply is within a predetermined range.
(9) The power supply protection circuit according to (7) or (8), which is configured so that
   an output of the power supply for the signal processing apparatus is also connected to the enable pin.
(10) The power supply protection circuit according to any of (6) to (9), which is configured so that
   the electric-field effect transistor is two n-channel type electric-field effect transistors connected in series.
(11) A signal processing apparatus, including:
   a power supply protection circuit including
      a capacitor that is connected in parallel with a vehicle power supply that supplies power to a power supply for a signal processing apparatus,
      a resistor that is arranged between the vehicle power supply and the capacitor, and
      an electric-field effect transistor that is connected in parallel with the resistor, the power supply protection circuit being configured so that
      the electric-field effect transistor is turned on when the power supply for the signal processing apparatus is activated; and
   a signal processing circuit that is activated by the power supply for the signal processing apparatus, the signal processing apparatus being configured so that
   the signal processing circuit detects a fault of the electric-field effect transistor by monitoring voltages at both ends of the electric-field effect transistor.
(12) The signal processing apparatus according to (11), which is configured so that
   the signal processing circuit notifies another signal processing apparatus in a case where the signal processing circuit has detected a fault of the electric-field effect transistor.
(13) A power supply protection circuit, including:
   an electric-field effect transistor that is arranged between a power supply for a signal processing apparatus and a vehicle power supply; and
   an ideal diode controller that controls the electric-field effect transistor, in which
   an enable pin of the power supply for the signal processing apparatus is connected to a FAULT pin of the ideal diode controller.

### Reference Signs List

- 11: ECU
- 14: vehicle power supply
- 32: protection circuit section
- 33: power supply circuit section
- 61: primary power supply
- 62: secondary power supply
- 71: signal processing section
- 81: signal processing IC
- 113, 114: n-channel type FET
- 115: ideal diode controller
- 118: p-channel type FET
- 119: resistor
- 121: digital transistor
- 124: high-capacity capacitor

## Claims

1. A power supply protection circuit, comprising:
a capacitor that is connected in parallel with a vehicle power supply that supplies power to a power supply for a signal processing apparatus; and
a resistor that is arranged between the vehicle power supply and the capacitor.

2. The power supply protection circuit according to claim 1, further comprising
an electric-field effect transistor that is connected in parallel with the resistor, the power supply protection circuit being configured so that
the electric-field effect transistor is turned on when the power supply for the signal processing apparatus is activated.

3. The power supply protection circuit according to claim 2, which is configured so that
the electric-field effect transistor is a p-channel type electric-field effect transistor.

4. The power supply protection circuit according to claim 2, which is configured so that
an output of the power supply for the signal processing apparatus is connected to a gate of the electric-field effect transistor.

5. The power supply protection circuit according to claim 4, which is configured so that
a transistor is connected to the gate of the electric-field effect transistor, and
the output of the power supply for the signal processing apparatus is connected to a gate of the transistor.

6. The power supply protection circuit according to claim 1, further comprising:
an electric-field effect transistor that is arranged between the vehicle power supply and the resistor; and
an ideal diode controller that controls the electric-field effect transistor, the power supply protection circuit being configured so that
an enable pin of the power supply for the signal processing apparatus is connected to a FAULT pin of the ideal diode controller.

7. The power supply protection circuit according to claim 6, which is configured so that
the ideal diode controller sets the FAULT pin to have a high impedance in a case where a ratio of an input voltage of the power supply for the signal processing apparatus to a voltage of the vehicle power supply is equal to or higher than a predetermined ratio.

8. The power supply protection circuit according to claim 7, which is configured so that
the ideal diode controller sets the FAULT pin to have a high impedance in a case where a ratio of the input voltage of the power supply for the signal processing apparatus to the voltage of the vehicle power supply is equal to or higher than a predetermined ratio, the voltage of the vehicle power supply is within a predetermined range, and an electric current value of a current that flows from the vehicle power supply is within a predetermined range.

9. The power supply protection circuit according to claim 7, which is configured so that
an output of the power supply for the signal processing apparatus is also connected to the enable pin.

10. The power supply protection circuit according to claim 6, which is configured so that
the electric-field effect transistor is two n-channel type electric-field effect transistors connected in series.

11. A signal processing apparatus, comprising:
a power supply protection circuit including
a capacitor that is connected in parallel with a vehicle power supply that supplies power to a power supply for a signal processing apparatus,
a resistor that is arranged between the vehicle power supply and the capacitor, and
an electric-field effect transistor that is connected in parallel with the resistor, the power supply protection circuit being configured so that
the electric-field effect transistor is turned on when the power supply for the signal processing apparatus is activated; and
a signal processing circuit that is activated by the power supply for the signal processing apparatus, the signal processing apparatus being configured so that
the signal processing circuit detects a fault of the electric-field effect transistor by monitoring voltages at both ends of the electric-field effect transistor.

12. The signal processing apparatus according to claim 11, which is configured so that
the signal processing circuit notifies another signal processing apparatus in a case where the signal processing circuit has detected a fault of the electric-field effect transistor.
